# EUROPÄISCHE PATENTSCHRIFT

(11) **EP 2 885 567 B1**
(45) Veröffentlichungstag und Bekanntmachung des Hinweises auf die Patenterteilung: **15.08.2018**
(21) Anmeldenummer: 13731138.7
(22) Anmeldetag: 25.06.2013
(51) Int. Cl.: F16L 37/098

(54) **SCHNELLVERBINDUNGSANORDNUNG ZUR LÖSBAREN VERBINDUNG EINER MEDIENLEITUNG MIT EINEM STUTZEN**
QUICK CONNECTION ARRAY FOR DETACHABLY CONNECTING A MEDIA LINE BY WAY OF A CONNECTING PIECE
DISPOSITIF DE RACCORDEMENT RAPIDE POUR LE RACCORDEMENT DÉMONTABLE D'UNE CONDUITE DE FLUIDE À UNE BUSE

(30) Priorität: 15.08.2012 DE 102012107463
(43) Veröffentlichungstag der Anmeldung: 24.06.2015
(73) Patentinhaber: ContiTech Schlauch GmbH, 30165 Hannover (DE)
(72) Erfinder: DUDE, Holger, 34516 Vöhl-Obernburg (DE)
(74) Vertreter: Finger, Karsten
(86) Internationale Anmeldenummer: PCT/EP2013/063173
(87) Internationale Veröffentlichungsnummer: WO 2014/026792

(56) Entgegenhaltungen:
- DE-C1- 4 413 346
- DE-C1- 10 115 399

## Beschreibung

Die Erfindung betrifft eine Schnellverbindungsanordnung zur lösbaren Verbindung einer Medienleitung mit einem (SAE-)Stutzen.

Es ist seit langem bekannt, die Verbindung zwischen medienfördernden Leitungen und Anschlüssen mittels Schnellverbindungen oder Schnellkupplungen, sog. Quick-Connectors (QC), durchzuführen, um bei der Montage Zeit zu sparen. Diese Schnellverbindungen werden z.B. für Geräteanschlüsse verwendet, die als Stutzen nach SAE-J 2044 ausgebildet sind. Derartige Schnellverbindungen werden gerne in der Automobilindustrie z.B. im Niederdruckbereich fluidfördernder Leitungen, d.h. bei Fluiddrücken bis ca. 10 bar, an diversen Schnittstellen wie z.B. am Tank oder bei Pumpen, Filtern, Ventilen usw. verwendet.

Nachteilig ist bei den bekannten derartigen Schnellverbindungen, dass eine verrastete bzw. verriegelte Schnellverbindung nicht zerstörungsfrei bzw. zerstörungsfrei nur aufwendig, z.B. mittels Werkzeug bzw. Hilfsmitteln, wieder gelöst, entrastet bzw. entriegelt werden kann. Dies erfordert Zeit und verursacht Kosten. Ferner kann eine zerstörend getrennte Schnellverbindung gar nicht bzw. nicht ohne weitere Maßnahmen wieder verwendet werden.

Die DE 101 15 399 C1 betrifft eine lösbare Steckkupplung zur Verbinden von Flüssigkeitsleitungen, insbesondere von Kraftstoffleitungen von Kraftfahrzeugen. Die Steckkupplung besteht hierbei aus einem rohrförmigen Einsteckteil mit einer umlaufenden Halterippe sowie aus einem Kupplungsgehäuse mit einem zylindrischen Aufnahmeraum für das Einsteckteil. Die Steckkupplung hat ein vergrößertes Kopfteil mit einem separaten Halteelement, das mit radial in den Aufnahmeraum gerichteten, elastisch auffederbaren Haltekanten versehen ist, welche die Halterippe nach dem Eindrücken des Einsteckteils hintergreifen. Um nach dem Einführen des Einsteckteils sicher zu gehen, dass die Halterippe korrekt hinter den Haltekanten eingerastet ist, ist ein zusätzliches Verriegelungselement vorgesehen, welches am Gehäusekopf zwischen einer Öffnungsstellung und einer Schließstellung querverschieblich geführt ist.

Die DE 44 13 346 C1 betrifft eine Steckkupplung zum Verbinden zweier Fluidleitungen, von denen eine Fluidleitung eine Halterippe aufweist. Die Steckverbindung weist eine Hülse mit radialen Durchbrüchen und eine in der Hülse verschiebbare Rasteinreichtung mit Haltearmen auf, wobei die Haken zum Hintergreifen der Halterippe dienen und eine radial äußere Schrägfläche aufweisen. Die Schrägfläche wird beim Auseinanderbewegen von Hülse und Rasteinrichtung gegen eine vordere Kante eines den Haken axial verschiebbar aufnehmenden Durchbruchs gedrückt, so dass der Haken entsprechend fester mit der Halterippe in Eingriff bleibt. Eine radial innere Schrägfläche der Haken kommt beim Auseinanderziehen der Rasteinrichtung und der eingeführten Fluidleitung mit der Halterippe zur Anlage, so dass die Haltearme gespreizt werden und ein Entkuppeln ermöglichen. Um das Entkuppeln zu erleichtern, hat die Rasteinrichtung zwischen wenigstens einem Paar benachbarter Haltearme einen Entriegelungsarm, der axial verschiebbar durch einen der Durchbrüche nach außen ragt.

Die Aufgabe der vorliegenden Erfindung ist es daher, eine Schnellverbindungsanordnung der eingangs beschriebenen Art bereit zu stellen, bei der ein schnelles und einfaches Verbinden von Medienleitung und Stutzen ebenso ermöglicht wird wie ein schnelles und einfaches, zerstörungsfreies und wiederverwendbares Trennen von Medienleitung und Stutzen.

Die Aufgabe wird erfindungsgemäß durch die Merkmale des Anspruchs 1 und des Anspruchs 8 gelöst. Vorteilhafte Weiterbildungen sind in den Unteransprüchen beschrieben.

Somit betrifft die vorliegende Erfindung eine Schnellverbindungsanordnung gemäß dem Anspruch 1 und einen Verriegelungskörper gemäß dem Anspruch 8. Der vorliegenden Erfindung liegt die Erkenntnis zugrunde, dass übliche Schnellverbindungsanordnung darauf ausgelegt sind, eine Verbindung zwischen einer Medienleitung, insbesondere Fluidleitung, und einem Stutzen eines Aggregats oder dergleichen schnell, einfach und mit wenig Montageaufwand, insbesondere wenig Montagehandgriffen bzw. -operationen, herstellen zu können. Jedoch wird bei diesen Schnellverbindungsanordnung wenig bis gar kein Wert darauf gelegt, wie diese Verbindung wieder getrennt werden kann, insbesondere, dass diese Verbindung schnell, einfach und wiederverwendbar getrennt werden kann.

Da jedoch derartige Verbindungen nicht nur einmalig bei der Montage z.B. eines Motors eines Kraftfahrzeugs hergestellt werden und dauerhaft bestehen sollen, sondern z.B. zu Wartungszwecken wieder getrennt werden müssen können, ist der Aspekt der schnellen, einfachen und wiederverwendbaren Trennbarkeit einer derartigen Verbindung nicht außer Acht zu lassen.

Diese Erkenntnis wird erfindungsgemäß dadurch umgesetzt, dass der gleiche Verriegelungskörper der Schnellverbindungsanordnung, die die Schnellverbindung zwischen Aggregat und Medienleitung herstellt, auch Entriegelungselemente aufweist, durch deren Betätigung die Verriegelung des Stutzens wieder aufgehoben werden kann. Hierdurch werden die schnelle Herstellung der Verbindung sowie deren sicherer Halt nicht beeinträchtigt, jedoch deren einfache, schnelle, zuverlässige und wiederverwendbare Aufheben und erneute Herstellung ermöglicht. Dies spart Aufwand und Kosten bei der Aufhebung der Verbindung sowie bei der erneuten Herstellung der Verbindung.

Unter einer im Wesentlichen radialen Wirkung der Ver- und Entriegelungselemente ist dabei im Sinne der vorliegenden Erfindung zu verstehen, dass diese Elemente durch im Wesentlichen radiale Bewegungen das Verriegeln des Stutzens in der Schnellverbindungsanordnung bzw. dessen Freigabe bewirken. Dabei wird der verriegelte Stutzen durch die Verriegelungselemente in Längsrichtung A in der Schnellverbindungsanordnung gehalten und verriegelt. Der hierfür erforderliche Mechanismus sowie der zur Aufhebung dieser Verriegelung erforderliche Mechanismus weisen jedoch hierfür eine radiale Bewegung auf, um den zum Einführen bzw. Herausziehen des Stutzens in Längsrichtung A erforderlichen Freiraum innerhalg der Schnellverbindungsanordnung zu schaffen.

Gemäß einem Aspekt der Erfindung weist der Verriegelungskörper zwei einander im Wesentlichen radial gegenüberliegende Verriegelungselemente und zwei einander im Wesentlichen radial gegenüberliegende Entriegelungselemente auf.

Vorteilhaft ist bei dieser Ausgestaltung, dass einander radial gegenüber liegenden Elemente bei einer radialen Bewegung optimal zusammenwirken können. Auch wird die Anzahl der Ver- und Entriegelungselemente auf jeweils zwei beschränkt, wodurch sich die erfindungsgemäße Schnellverbindungsanordnung vereinfacht und einfach und kostengünstig herstellen und montieren lässt. Auch entsteht hierdurch eine achssymmetrische Anordnung, so dass sich die Entriegelungselemente von außen einfacher betätigen lassen, z.B. auch automatisiert.

Vorzugsweise nehmen die Ver- und Entriegelungselemente des Verriegelungskörpers jeweils einen ungefähr gleichen Winkel in Umfangsrichtung ein, d.h. die Ver- und Entriegelungselemente sind in Umfangsrichtung ungefähr gleich dimensioniert. Vorteilhaft ist hierbei, dass gleichgroße Elemente einfacher und gleichmäßiger zusammenwirken können als unterschiedlich dimensionierte Elemente.

Gemäß einem weiteren Aspekt der Erfindung sind die Entriegelungselemente im Wesentlichen ca. 90° in Umfangsrichtung versetzt zu den Verriegelungselementen angeordnet. Dies hat den Vorteil, dass die Ver- und Entriegelungselemente des Verriegelungskörpers einander nicht bei der Ausübung ihrer erfindungsgemäßen Funktion behindern und diese jeweils in radialer Richtung R wirken können, d.h. in radialer Richtung R beweglich sind, ohne einander in ihrer erfindungsgemäßen Funktion zu behindern. Auch wird hierdurch eine achssymmetrische Anordnung geschaffen, bei der sich die untereinander wirkenden Kräfte gleichmäßig in Umfangsrichtung verteilen.

Vorzugsweise nehmen die Ver- und Entriegelungselemente des Verriegelungskörpers jeweils ungefähr einen Winkel von ca. 90 ° in Umfangsrichtung ein. Vorteilhaft ist hierbei, dass eine derartige Anordnung und Ausgestaltung der Ver- und Entriegelungselemente ein erfindungsgemäßes Zusammenwirken dieser Elemente aufgrund der gleichmäßigen Kraftverteilung in Umfangsrichtung begünstigt.

Gemäß einem weiteren Aspekt der Erfindung sind sowohl die Verriegelungselemente als auch die Entriegelungselemente radial federnd vorgesehen.

Vorteilhaft ist hierbei, dass auf diese Weise die Beweglichkeit bzw. Auslenkbarkeit der Ver- und Entriegelungselemente im Wesentlichen in radialer Richtung R ermöglicht wird. Gleichzeitig weisen beide Elemente eine bevorzugte Stellung auf, aus der sie durch im Wesentlichen radial wirkende Kräfte ausgelenkt werden und in die sie auch wieder zurückfedern können.

Gemäß einem weiteren Aspekt der Erfindung sind die Verriegelungselemente radial nach innen rückfedernd und die Entriegelungselemente radial nach außen rückfedernd vorgesehen.

Vorteilhaft ist hierbei, dass die Verriegelungselemente auf diese Weise in ihrer bevorzugten Stellung die Verriegelung des Stutzens, z.B. durch Hintergreifen eines radial nach außen gerichteten Vorsprungs der äußeren Oberfläche des Stutzens, durch entsprechende radial nach innen gerichtete Vorsprünge bewirken und hierdurch ein Ausziehen des Stutzens aus der Schnellverbindungsanordnung in Längsrichtung A verhindern können, ohne das hierzu Kräfte aufgebracht werden müssen. Dies bedeutet, dass in dieser Stellung keine bzw. nur unwesentliche Federkräfte in den Verriegelungselementen wirken und diese in dieser bevorzugten Stellung entspannt sind.

Soll hingegen die Verriegelung des Stutzens in der Schnellverbindungsanordnung hergestellt werden, so werden die Verriegelungselemente durch den Vorsprung des Stutzens radial nach außen ausgelenkt, federn jedoch aus dieser Stellung wieder in ihre bevorzugte Stellung radial nach innen zurück und verriegeln dann den eingeführten Stutzen in der Schnellverbindungsanordnung, sobald der Vorsprung des Stutzens die Verriegelungselemente in Längsrichtung A nach innen passiert hat und diese nicht mehr radial nach außen auslenkt.

Andersherum ist bei den Entriegelungselementen ihre bevorzugte Stellung in radialer Richtung nach außen rückfedernd vorgesehen. So können die Entriegelungselemente zur Entriegelung der Verriegelungselemente radial nach innen gedrückt werden und federn dann wieder in ihre äußere bevorzugte Stellung zurück, sobald die radial nach innen wirkende Kraft aufgehoben wird.

Gemäß der Erfindung weisen die Verriegelungselemente und die Entriegelungselemente jeweils in Umfangsrichtung ausgerichtete Kontaktflächen auf, die einander in Umfangsrichtung berühren können und aneinander in radialer Richtung R gleiten können.

Vorteilhaft ist hierbei, dass die Ver- und Entriegelungselemente über ihre jeweiligen Kontaktflächen aufeinander in Umfangsrichtung wirkende Kräfte ausüben und einander so gegenseitig radial auslenken können. Auf diese Weise können durch radial wirkende Kräfte auf die Ver- oder Entriegelungselemente, entweder durch von außen bewirkte Kräfte oder die Federwirkungen der Elemente selbst, radiale Bewegungen der jeweils anderen Elemente bewirkt werden, ohne dass es hierzu weiterer mechanischer Elemente bedarf.

Gemäß der Erfindung sind die Entriegelungselemente vorgesehen, radial nach innen gedrückt werden zu können, so dass die Kontaktflächen der Entriegelungselemente die Verriegelungselemente über deren Kontaktflächen radial nach außen drücken.

Vorteilhaft ist hierbei, dass auf diese Weise eine einfache Wirkung zwischen den Ver- und Entriegelungselementen erreicht werden kann. So führt das radial nach innen gerichtete Eindrücken der Entriegelungselemente dazu, dass die Kontaktflächen der Entriegelungselemente Kräfte in Umfangsrichtung auf die ihnen entsprechenden Kontaktflächen der Verriegelungselemente ausüben. Diese Kräfte nehmen aufgrund der konstanten Dimensionierung der Entriegelungselemente in Umfangsrichtung mit sich verringerndem Radius R zu.

Berühren nun beim Eindrücken die Kontaktflächen der Entriegelungselemente die korrespondierenden Kontaktflächen der Verriegelungselemente, so werden die Verriegelungselemente durch die in Umfangsrichtung wirkenden Kräfte radial nach außen ausgelenkt. Hierzu ist es vorteilhaft, wenn die jeweiligen Kontaktflächen einen geringen Reibwiderstand aufweisen, so dass die Kräfte in Umfangsrichtung möglichst reibverlustfrei von den Entriegelungselementen auf die Verriegelungselemente übertragen werden können und hierdurch dieser Vorgang mit möglichst geringen radial wirkenden Eindrückkräften bewirkt werden kann.

Zur Umsetzung dieses Wirkprinzips ist es vorteilhaft, wenn beiderseits der Entriegelungselemente die Kontaktflächen jeweils mit den entsprechenden Kontaktflächen der Verriegelungselemente zusammenwirken, weil hierdurch dieser Vorgang begünstigt und die hierfür erforderlichen radial wirkenden Eindrückkräfte gering gehalten werden. Es ist jedoch auch möglich und von der vorliegenden Erfindung umfasst, die Entriegelungselemente mit jeweils nur einer Kontaktfläche gegen die Verriegelungselemente in Umfangsrichtung Kräfte ausüben zu lassen, da der Gedanke der Erfindung auch auf diese Weise umgesetzt werden kann.

Gemäß einem weiteren Aspekt der Erfindung weist das Gehäuse wenigstens zwei einander im Wesentlichen radial gegenüberliegende Öffnungsaussparungen auf, durch die hindurch die Entriegelungselemente betätigt werden können.

Vorteilhaft ist hierbei, dass die Entriegelungselemente auf diese Weise von außen zugänglich sind und bei betriebsbereiter Schnellverbindungsanordnung die Entriegelungselemente von außen betätigt werden können.

Gemäß einem weiteren Aspekt der Erfindung weist die Schnellverbindungsanordnung ferner eine Abdeckung zur Fixierung des Verriegelungskörpers innerhalb des Gehäuses auf, wobei die Abdeckung mittels wenigstens einer Verriegelungsöffnung durch wenigstens einen Vorsprung des Gehäuses in Längsrichtung A gehalten wird.

Vorteilhaft ist hierbei, dass die Abdeckung den Verriegelungskörper im Gehäuse sicher halten und positionieren und die Schnellverbindungsanordnung einfach und schnell zusammengebaut und hergestellt werden kann. Ferner weist die Abdeckung eine einfache Halterung auf, mit der sie am Gehäuse sicher gehalten werden kann. Gleichzeitig kann die Abdeckung jedoch auch aufgrund ihrer eingerasteten Halterung einfach und schnell wieder von dem Gehäuse entfernt werden.

Das Gehäuse, der Verriegelungskörper sowie die Abdeckung können einen Kunststoff aufweisen oder aus diesem bestehen. Als Kunststoff kann vorzugsweise ein Polyamid (PA), Polyphthalamid (PPA) oder Polyphenylensulfid (PPS) verwendet werden. Besonders bevorzugt wird als Material des Gehäuses PA12, PA612, PA610, PPA oder PPS, als Material des Verriegelungskörpers PA11, PA612 oder PA610 und als Material der Abdeckung PA12, PA612, PA610 verwendet.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Schnittdarstellung einer Schnellverbindungsanordnung mit Fluidleitung und eingeführtem und verriegeltem Stutzen;
- Fig. 2: eine perspektivische schematische geschlossene Darstellung der Schnellverbindungsanordnung der Fig. 1;
- Fig. 3: eine perspektivische schematische Darstellung des Gehäuses der Schnellverbindungsanordnung;
- Fig. 4: eine perspektivische schematische Darstellung des Verriegelungskörpers der Schnellverbindungsanordnung;
- Fig. 5: eine perspektivische schematische Darstellung der Abdeckung der Schnellverbindungsanordnung;
- Fig. 6: eine perspektivische schematische Schnittdarstellung der Schnellverbindungsanordnung mit Fluidleitung und teilweise eingeführtem und nicht-verriegelten Stutzen;
- Fig. 7: eine weitere perspektivische schematische Schnittdarstellung der Ansicht der Fig. 1 ohne Abdeckung; und
- Fig. 8: eine perspektivische schematische Schnittdarstellung der Schnellverbindungsanordnung mit Fluidleitung und entriegeltem Stutzen ohne Abdeckung.

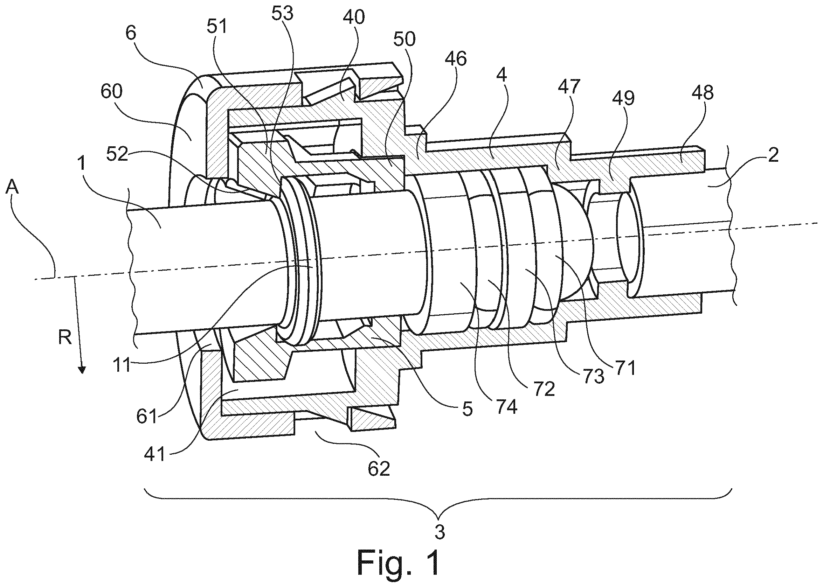

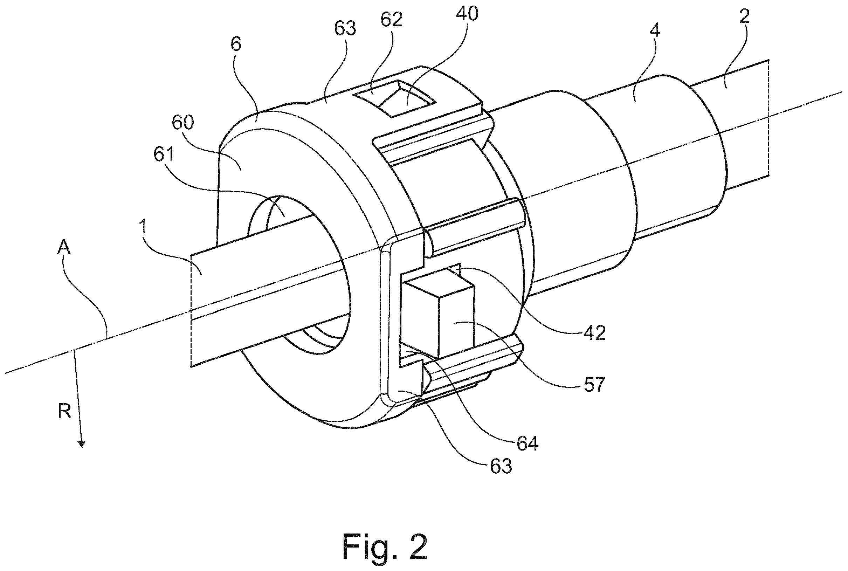

**Fig. 1** zeigt eine perspektivische schematische Schnittdarstellung einer Schnellverbindungsanordnung 3 mit Fluidleitung 2 und eingeführtem und verriegeltem Stutzen 1. **Fig. 2** zeigt eine perspektivische schematische geschlossene Darstellung der Schnellverbindungsanordnung der **Fig. 1****.**

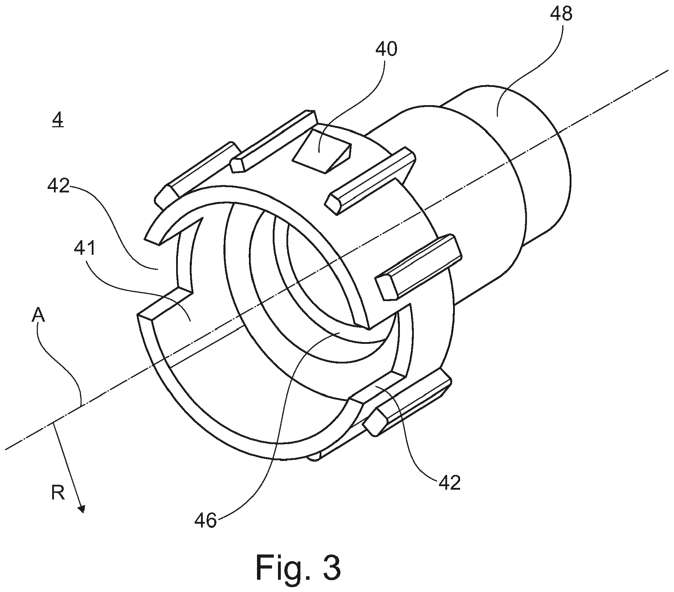

Die Schnellverbindungsanordnung 3 weist ein Gehäuse 4, einen Verriegelungskörper 5 und eine Abdeckung 6 auf, die in den **Fig. 3 bis 5** jeweils in einer perspektivischen schematischen Darstellung einzeln dargestellt sind.

Das Gehäuse 4 (siehe auch **Fig. 3**) stellt im Wesentlichen einen zylindrischen Körper dar, der in seiner Richtung der Längsachse A von einem Medium durchströmt werden kann. Dieses Medium ist vorzugsweise ein Fluid. An seinem einen Ende in Richtung der Längsachse A weist das Gehäuse 4 eine Öffnung 48 zur Aufnahme einer Fluidleitung 2 auf. Diese kann bis zu einem entsprechenden Anschlag 49 im Inneren des Gehäuses 4 in dessen Öffnung 48 eingeschoben werden. Die Befestigung der eingeschobenen Fluidleitung 2 in der Öffnung 48 kann z.B. kraftschlüssig und bzw. oder formschlüssig durch einen Stutzen mit Tannenbaumprofil erfolgen. Alternativ oder zusätzlich kann diese Befestigung durch eine stoffschlüssige Verbindung wie z.B. durch Schweißen z.B. mittels Reib- oder Laserschweißen ausgeführt werden.

Das Gehäuse 4 weist auf der der Öffnung 48 der Fluidleitung 2 in Richtung der Längsachse A gegenüberliegenden Seite eine Stutzenöffnung 41 zur Aufnahme eines Stutzens 1 (SAE-Stutzen 1) auf. Der Stutzen 1 kann in diese Stutzenöffnung 41 bis zu einem entsprechenden Anschlag 47 im Inneren des Gehäuses 4 eingeschoben werden.

Der Stutzen 1 weist an seinem Ende, mit dem der Stutzen 1 in das Gehäuse 4 eingeschoben wird, eine Dichtungsanordnung auf, die, von innen nach außen, einen ersten Dichtungsring 71, einen Abstandsring 73, einen zweiten Dichtungsring 72 und eine Führungsbuchse 74 aufweist. Dabei sind die beiden Dichtungsringe 71, 72 als O-Ringe ausgeführt. Alternativ kann auch eine einfache Dichtungsanordnung 71-74 verwendet werden, die z.B. aus lediglich einem Dichtungsring 71 (O-Ring) besteht.

Der Stutzen 1 weist ferner einen Bund 11 auf, der als geschlossener Ring auf der äußeren Oberfläche des Stutzens 1 ausgebildet ist. Alternativ könnten jedoch auf abschnittsweise ausgebildete Vorsprünge auf der äußeren Oberfläche des Stutzens 1 verwendet werden, um eine erfindungsgemäße Wirkung zwischen dem Stutzen 1 und der Schnellverbindungsanordnung 3 zu erreichen. Der Bund 11 dient der Verriegelung des Stutzens 1 in dem Gehäuse 4 der Schnellverbindungsanordnung 3; diese wird mittels eines Verriegelungskörpers 5 bewirkt, welcher im Inneren des Gehäuses 4 vorgesehen ist.

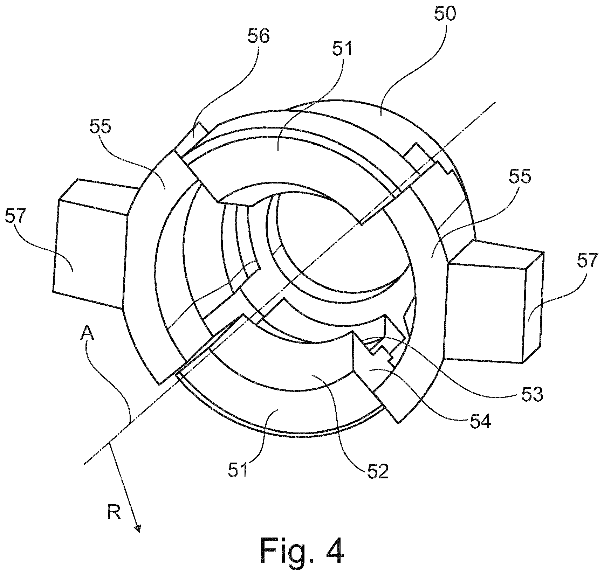

Der Verriegelungskörper 5 (siehe auch **Fig. 4**) weist einen ringförmig geschlossenen Ringkörper 50 auf, von dem sich zum einen zwei einander radial gegenüberliegende Verriegelungselemente 51 und ca. 90° hierzu versetzt zum anderen zwei einander radial gegenüberliegende Entriegelungselemente 55 in Richtung der Längsachse A erstrecken.

Beide Verriegelungselemente 51 weisen an ihrer radial innenliegenden Seite eine Einführungsschräge 52 und eine Hintergriffsfläche 53 auf. Die Schrägung der Einführungsschrägen 52 ist so ausgebildet, dass der radiale Vorsprung 11 des Stutzens 1 an diesen Einführungsschrägen 52 beim Einführen in die Schnellverbindungsanordnung 3 gleiten und die beiden Verriegelungselemente 51 hierdurch radial nach außen auslenken kann. D.h. die beiden Verriegelungselemente 51 federn radial nach innen zurück, um hinter dem Vorsprung 11 des eingeführten Stutzens 1 diesen in Längsrichtung A verriegeln zu können. Hierzu sind die Hintergriffsflächen 53 so ausgebildet, dass sie durch den Vorsprung 11 nicht radial ausgelenkt werden können, sodass der Stutzen 1 nach seiner Verriegelung in Längsrichtung A nicht aus der Schnellverbindungsanordnung 3 herausgezogen werden kann. Hierzu sind die Hintergriffsflächen 53 möglichst senkrecht stehend ausgeführt.

Beide Entriegelungselemente 55 sind so angeordnet und ausgebildet, dass sie die Bewegung des Stutzens 1 in Längsrichtung A nie behindern können. Sie sind radial nach außen rückfedernd ausgebildet, so dass die Entriegelungselemente 55, falls sie durch von außen angreifende Kräfte radial nach innen zur Längsachse A hin gedrückt wurden, danach wieder selbstständig in ihre Ausgangslage zurückfedern.

Die Verriegelungselemente 51 und Entriegelungselemente 55 weisen jeweils in Umfangsrichtung ausgerichtete Kontaktflächen 54, 56 auf, die einander in diesem bevorzugten Ausführungsbeispiel berühren, was jedoch zur erfindungsgemäßen Funktion dieser Schnellverbindungsanordnung 3 nicht erforderlich ist; hierzu ist es ausreichend, wenn sich die Kontaktflächen 54, 56 dann berühren, wenn sie aufeinander Kräfte in Umfangsrichtung übertragen sollen. Auf jeden Fall sind die Kontaktflächen 54, 56 so ausgebildet, dass sie zwischen einander einen möglichst geringen Reibwiderstand aufweisen.

Die beiden Entriegelungselemente 55 weisen ferner jeweils ein Eindrückelement 57 auf, welches radial nach außen hervorsteht. Diese dient als Angriffsfläche für von außen auf die Entriegelungselemente 55 radial nach innen aufzubringenden Kräfte. Diese Eindrückelemente 57 ragen dabei aus entsprechenden Öffnungsaussparungen 42 des Gehäuses 4 sowie Einbuchtungen 64 der Abdeckung 6 radial nach außen aus diesen hinaus.

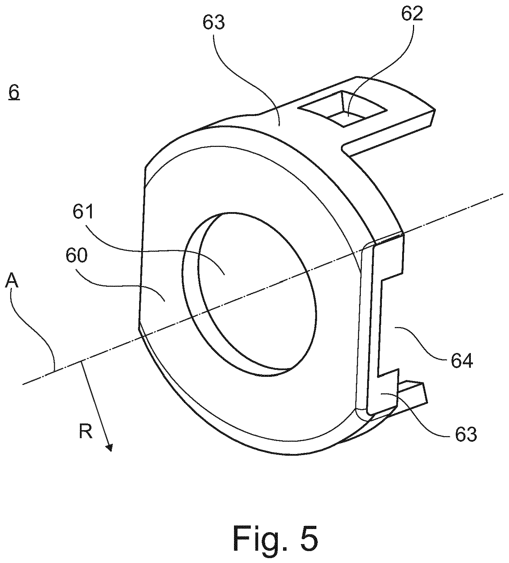

Die Abdeckung 6 (siehe auch **Fig. 5**) der Schnellverbindungsanordnung 3 weist eine radial verlaufende Deckelfläche 60 mit einer konzentrischen Stutzenöffnung 61 auf, die in Richtung der Längsachse A zeigt und durch die der Stutzen 1 ragen und geführt werden kann. In Längsrichtung A weist die Abdeckung 6 zwei einander radial gegenüberliegende Seitenflächen 63 auf, die jeweils eine Verriegelungsöffnung 62 besitzen, in die entsprechende Vorsprünge 40 des Gehäuses 4 eingreifen können, um die Abdeckung 6 an dem Gehäuse 4 eingerastet zu halten. Ferner weist die Abdeckung 6 in Längsrichtung A zwei einander radial gegenüberliegende Seitenflächen 63 mit in Längsrichtung A verlaufenden Einbuchtungen 64 für die Eindrückelemente 57 der Entriegelungselemente 55 auf.

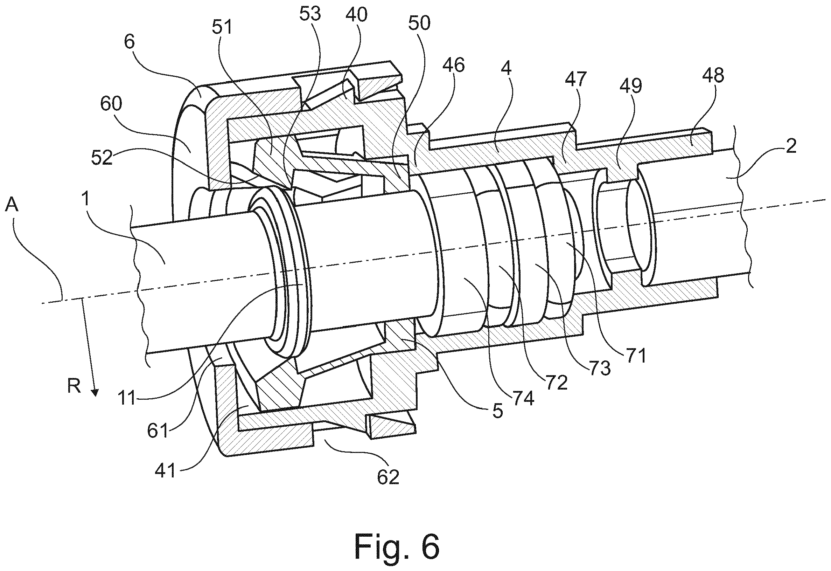

Die Funktionsweise der Schnellverbindungsanordnung 3 beim Verriegeln des Stutzens 1 in der Schnellverbindungsanordnung 3 wird nun im Folgenden mit Bezug auf die **Fig. 1****,** **2** **und** **6** kurz beschrieben:
- Der Stutzen 1 wird in Richtung der Längsachse A durch die Stutzenöffnung 61 der Abdeckung 6 in die Stutzenöffnung 41 des Gehäuses 4 eingeführt (vgl. **Fig. 6**);
- hierbei hebt der Stutzen 1 mittels seines Vorsprungs 11 die Verriegelungselemente 51 über deren Einführungsschrägen 52 an (vgl. **Fig. 6**), bis der Vorsprung 11 in Längsrichtung A hinter den Hintergriffsflächen 53 der Verriegelungselemente 51 verriegelt wird (vgl. **Fig. 1**).

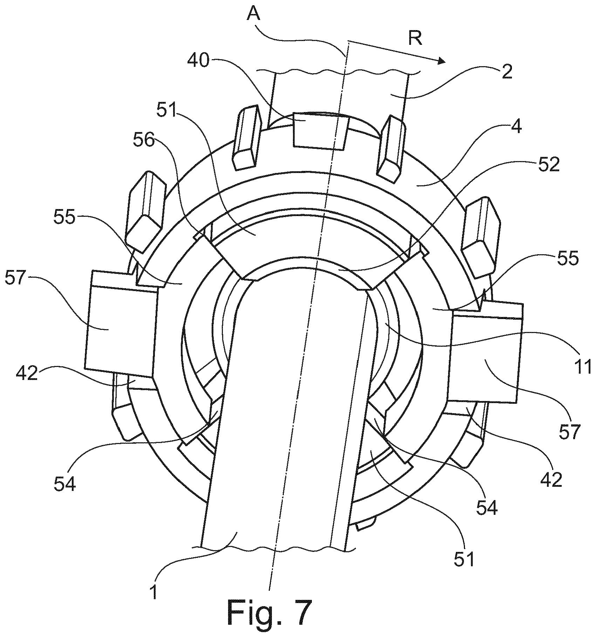

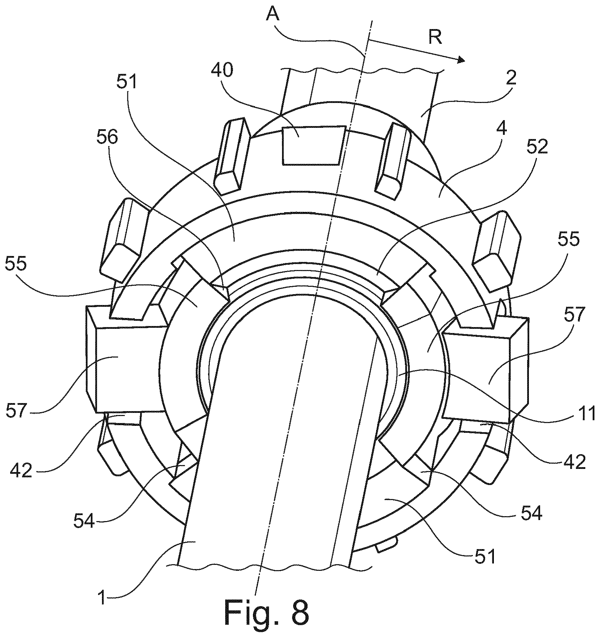

Die erfindungsgemäße Funktionsweise der Schnellverbindungsanordnung 3 beim wiederverwendbaren Entriegeln des Stutzens 1 aus der Schnellverbindungsanordnung 3 wird nun im Folgenden mit Bezug auf die **Fig. 7** **und** **8** beschrieben:
Im verriegelten Zustand hintergreifen die Hintergriffsflächen 53 der Verriegelungselemente 51 den Vorsprung 11 des Stutzens 1 in Längsrichtung A. Aufgrund ihrer radial nach innen gerichteten Federung halten die Verriegelungselemente 51 diese Position von sich aus ein und können auch an der Außenoberfläche des Stutzens 1 radial anliegen an. Die in Umfangsrichtung ausgerichteten Kontaktflächen 54 der Verriegelungselemente 51 liegen dabei berührend an den entsprechenden, ebenfalls in Umfangsrichtung ausgerichteten Kontaktflächen 56 der Entriegelungselemente 55 an (vgl. **Fig. 7**).

Soll nun der Stutzen 1 aus der Schnellverbindungsanordnung 3 in Längsrichtung A herausgezogen werden, so werden die Entriegelungselemente 55 mittels ihrer Eindrückelemente 57, die sowohl aus den entsprechenden Öffnungsaussparungen 42 des Gehäuses 4 als auch den entsprechenden Einbuchtungen 64 der Abdeckung 6 radial herausragen, von außen eingedrückt und hierdurch radial nach innen bewegt. Hierdurch über die Kontaktflächen 56 der Entriegelungselemente 55 auf die entsprechenden Kontaktflächen 54 der Verriegelungselemente 51 in Umfangsrichtung Kräfte aus. Dabei werden die radial nach innen einwirkenden Kräfte der Entriegelungselemente 55 auf die Verriegelungselemente 51 so übertragen, dass diese radial nach außen bewegt werden. Hierdurch werden die Hintergriffsflächen 53 der Verriegelungselemente 51 radial so weit von dem Stutzen 1 abgehoben, dass diese den Vorsprung 11 des Stutzens 1 in Längsrichtung A freigeben und der Stutzen 1 dann aus der Schnellverbindungsanordnung 3 in Längsrichtung A herausgezogen werden kann (vgl. **Fig. 8**).

Die Bewegungsfreiheit der Ent- und Verriegelungselemente 55, 51 in radialer Richtung R wird dabei durch die Ausgestaltung des Gehäuses 4 derart begrenzt, dass ein sicheres und funktionsgemäßes Wirken dieser Elemente 55, 51 gewährleistet ist, ohne diese zu beschädigen und ohne das Ausziehen des entriegelten Stutzens 1 zu behindern.

Nachdem der Stutzen 1 aus der Schnellverbindungsanordnung 3 herausgezogen wurde, kann die radial eindrückende Kraft wieder von den Eindrückelementen 57 der Entriegelungselemente 55 genommen werden. Diese federn dann radial nach außen wieder in ihre Ausgangsposition zurück und nehmen dabei die in Umfangsrichtung wirkenden Kräfte von den Kontaktflächen 54 der Verriegelungselemente 51. Diese wiederum federn hierdurch radial nach innen wieder in ihre Ausgangsposition zurück.

Auf diese Weise kann der Stutzen 1 einfach und schnell entriegelt und aus der erfindungsgemäßen Schnellverbindungsanordnung 3 gezogen werden, welche nach diesem Vorgang unbeschädigt und sofort wieder einsatzbereit im Ausgangszustand für die erneute Aufnahme eines Stutzens 1 zur Verfügung steht, ohne dass weitere Maßnahmen getroffen werden müssen.

### Bezugszeichenliste

### (Teil der Beschreibung)

- A: Längsachse, Längsrichtung
- R: Radius, radiale Richtung senkrecht zur Längsachse A

- 1: (SAE-)Stutzen
- 11: radialer Vorsprung, vorzugsweise Bund des Stutzens 1
- 2: Medienleitung, vorzugsweise Fluidleitung
- 3: Schnellverbindungsanordnung
- 4: Gehäuse der Schnellverbindungsanordnung 3
- 40: Vorsprünge zum Halten der Abdeckung 6 in Längsrichtung A
- 41: Stutzenöffnung
- 42: Öffnungsaussparungen für Entriegelungselemente 55 bzw. Eindrückelemente 57
- 46: Anschlag für Verriegelungskörper 5
- 47: Anschlag für ersten Dichtungsring 71
- 48: Öffnung für Fluidleitung 2
- 49: Anschlag für Fluidleitung 2
- 5: Verriegelungskörper
- 50: Ringkörper des Verriegelungskörpers 5
- 51: Verriegelungselemente
- 52: Einführungsschrägen der Verriegelungselemente 51
- 53: Hintergriffsflächen der Verriegelungselemente 51
- 54: Kontaktflächen der Verriegelungselemente 51
- 55: Entriegelungselemente
- 56: Kontaktflächen der Entriegelungselemente 55
- 57: Eindrückelemente der Entriegelungselemente 55
- 6: Abdeckung
- 60: Deckelfläche der Abdeckung 6
- 61: Stutzenöffnung der Deckelfläche 60
- 62: Verriegelungsöffnungen zur Aufnahme der Vorsprünge 40
- 63: Seitenflächen der Abdeckung 6
- 64: Einbuchtungen der Seitenflächen 63 für Entriegelungselemente 55 bzw. Eindrückelemente 57
- 71: erster Dichtungsring (O-Ring)
- 72: zweiter Dichtungsring (O-Ring)
- 73: Abstandsring
- 74: Führungsbuchse

## Patentansprüche

1. Schnellverbindungsanordnung (3) zur lösbaren Verbindung einer Medienleitung (2) mit einem (SAE-)Stutzen (1), mit
einem Gehäuse (4) mit einer Öffnung (48) zur Aufnahme der Medienleitung (2) und einer Stutzenöffnung (41) zur Aufnahme des (SAE-)Stutzens (1), so dass zwischen der Medienleitung (2) und dem (SAE-)Stutzen (1) ein Medium durch das Gehäuse (4) geführt werden kann, und
einem Verriegelungskörper (5) zur Verriegelung des (SAE-)Stutzens (1) in der Stutzenöffnung (41), welcher im Wesentlichen innerhalb der Stutzenöffnung (41) angeordnet ist und wenigstens zwei im Wesentlichen radial wirkende Verriegelungselemente (51) aufweist, die vorgesehen sind, den (SAE-)Stutzen (1) in der Stutzenöffnung (41) in Längsrichtung A zu verriegeln,
wobei der Verriegelungskörper (5) ferner wenigstens zwei im Wesentlichen radial wirkende Entriegelungselemente (55) aufweist, welche vorgesehen sind, durch ihre Betätigung die Verriegelung des (SAE-)Stutzens (1) durch die Verriegelungselemente (51) aufheben zu können,
**dadurch gekennzeichnet,**
**dass** die Verriegelungselemente (51) und die Entriegelungselemente (55) jeweils in Umfangsrichtung ausgerichtete Kontaktflächen (54, 56) aufweisen, die einander in Umfangsrichtung berühren können und aneinander in radialer Richtung R gleiten können,
wobei die Entriegelungselemente (55) vorgesehen sind, radial nach innen gedrückt werden zu können, so dass die Kontaktflächen (56) der Entriegelungselemente (55) die Verriegelungselemente (51) über deren Kontaktflächen (54) radial nach außen drücken.

2. Schnellverbindungsanordnung (3) nach Anspruch 1,
wobei der Verriegelungskörper (5) zwei einander im Wesentlichen radial gegenüberliegende Verriegelungselemente (51) und zwei einander im Wesentlichen radial gegenüberliegende Entriegelungselemente (55) aufweist.

3. Schnellverbindungsanordnung (3) nach Anspruch 2,
wobei die beiden Entriegelungselemente (55) im Wesentlichen ca. 90° in Umfangsrichtung versetzt zu den beiden Verriegelungselementen (51) angeordnet sind.

4. Schnellverbindungsanordnung (3) einem der vorherigen Ansprüche,
wobei sowohl die Verriegelungselemente (51) als auch die Entriegelungselemente (55) radial federnd vorgesehen sind.

5. Schnellverbindungsanordnung (3) nach Anspruch 4,
wobei die Verriegelungselemente (51) radial nach innen rückfedernd und die Entriegelungselemente (55) radial nach außen rückfedernd vorgesehen sind.

6. Schnellverbindungsanordnung (3) nach einem der vorherigen Ansprüche,
wobei das Gehäuse (4) wenigstens zwei einander im Wesentlichen radial gegenüberliegende Öffnungsaussparungen (42) aufweist, durch die hindurch die Entriegelungselemente (55) betätigt werden können.

7. Schnellverbindungsanordnung (3) nach einem der vorherigen Ansprüche,
ferner mit einer Abdeckung (6) zur Fixierung des Verriegelungskörpers (5) innerhalb des Gehäuses (4),
wobei die Abdeckung (6) mittels wenigstens einer Verriegelungsöffnung (62) durch wenigstens einen Vorsprung (40) des Gehäuses (4) in Längsrichtung A gehalten wird.

8. Verriegelungskörper (5) zur Verwendung in einer Schnellverbindungsanordnung (3) nach einem der Ansprüche 1 bis 7,
wobei der Verriegelungskörper (5) wenigstens zwei im Wesentlichen radial wirkende Verriegelungselemente (51) aufweist, die vorgesehen sind, einen (SAE-)Stutzen (1) in einer Stutzenöffnung (41) eines Gehäuses (4) in Längsrichtung A zu verriegeln,
wobei der Verriegelungskörper (5) ferner wenigstens zwei im Wesentlichen radial wirkende Entriegelungselemente (55) aufweist, welche vorgesehen sind, durch ihre Betätigung die Verriegelung des (SAE-)Stutzens (1) durch die Verriegelungselemente (51) aufheben zu können,
wobei die Verriegelungselemente (51) und die Entriegelungselemente (55) jeweils in Umfangsrichtung ausgerichtete Kontaktflächen (54, 56) aufweisen, die einander in Umfangsrichtung berühren können und aneinander in radialer Richtung R gleiten können,
wobei die Entriegelungselemente (55) vorgesehen sind, radial nach innen gedrückt werden zu können, so dass die Kontaktflächen (56) der Entriegelungselemente (55) die Verriegelungselemente (51) über deren Kontaktflächen (54) radial nach außen drücken.

## Claims

1. Quick connection array (3) for detachably connecting a media line (2) by way of a (SAE) connecting piece (1),
a housing (4) with an opening (48) for receiving the media line (2) and a connecting piece opening (41) for receiving the (SAE) connecting piece (1) so that a medium can be guided through the housing (4) between the media line (2) and the (SAE) connecting piece (1), and
a locking body (5) for locking the (SAE) connecting piece (1) in the connecting piece opening (41), which locking body is arranged substantially within the connecting piece opening (41) and has at least two substantially radially acting locking elements (51) which are provided to lock the (SAE) connecting piece (1) in the connecting piece opening (41) in longitudinal direction A,
wherein the locking body (5) furthermore has at least two substantially radially acting unlocking elements (55) which are provided in order, by their activation, to be able to remove the locking of the (SAE) connecting piece (1) by the locking elements (51),
**characterized in that**
the locking elements (51) and the unlocking elements (55) have contact surfaces (54, 56) which are aligned in each case in the circumferential direction, can contact one another in the circumferential direction and can slide on one another in radial direction R,
wherein the unlocking elements (55) are provided in order to be able to be pushed radially inwards so that the contact surfaces (56) of the unlocking elements (55) push the locking elements (51) radially outwards via their contact surfaces (54).

2. Quick connection array (3) according to Claim 1,
wherein the locking body (5) has two locking elements (51) which are substantially radially opposite one another and two unlocking elements (55) which are substantially radially opposite one another.

3. Quick connection array (3) according to Claim 2,
wherein the two unlocking elements (55) are arranged offset by substantially approx. 90° in the circumferential direction with respect to the two locking elements (51).

4. Quick connection array (3) according to one of the preceding claims,
wherein both the locking elements (51) and the unlocking elements (55) are provided in a radially resilient manner.

5. Quick connection array (3) according to Claim 4,
wherein the locking elements (51) are provided to spring back radially inwards and the unlocking elements (55) are provided to spring back radially outwards.

6. Quick connection array (3) according to one of the preceding claims,
wherein the housing (4) has at least two opening recesses (42) which are substantially radially opposite one another and through which the unlocking elements (55) can be activated.

7. Quick connection array (3) according to one of the preceding claims,
further with a cover (6) for fixing the locking body (5) within the housing (4),
wherein the cover (6) is retained in longitudinal direction A by means of at least one locking opening (62) by at least one projection (40) of the housing (4).

8. Locking body (5) for use in a quick connection array (3) according to one of Claims 1 to 7,
wherein the locking body (5) has at least two substantially radially acting locking elements (51) which are provided to lock a (SAE) connecting piece (1) in a connecting piece opening (41) of a housing (4) in longitudinal direction A,
wherein the locking body (5) furthermore has at least two substantially radially acting unlocking elements (55) which are provided in order, by their activation, to be able to remove the locking of the (SAE) connecting piece (1) by the locking elements (51),
wherein the locking elements (51) and the unlocking elements (55) have contact surfaces (54, 56) which are aligned in each case in the circumferential direction, can contact one another in the circumferential direction and can slide on one another in radial direction R,
wherein the unlocking elements (55) are provided in order to be able to be pushed radially inwards so that the contact surfaces (56) of the unlocking elements (55) push the locking elements (51) radially outwards via their contact surfaces (54).

## Revendications

1. Dispositif de raccordement rapide (3) pour le raccordement démontable d'une conduite de fluide (2) à une buse (SAE) (1), avec
un boîtier (4) avec une ouverture (48) destinée recevoir la conduite de fluide (2) et une ouverture de buse (41) destinée à recevoir la buse (SAE) (1), de telle manière qu'un fluide puisse être guidé à travers le boîtier (4) entre la conduite de fluide (2) et la buse (SAE) (1), et
un corps de verrouillage (5) pour le verrouillage de la buse (SAE) (1) dans l'ouverture de buse (41), qui est disposé essentiellement à l'intérieur de l'ouverture de buse (41) et qui présente au moins deux éléments de verrouillage (51) agissant essentiellement radialement, qui sont prévus pour verrouiller la buse (SAE) (1) dans l'ouverture de buse (41) dans la direction longitudinale A,
dans lequel le corps de verrouillage (5) présente en outre au moins deux éléments de déverrouillage (55) agissant essentiellement radialement, qui sont prévus pour pouvoir, par leur actionnement, lever le verrouillage de la buse (SAE) (1) par les éléments de verrouillage (51),
**caractérisé en ce que**
les éléments de verrouillage (51) et les éléments de déverrouillage (55) présentent respectivement des faces de contact (54, 56) orientées en direction périphérique, qui peuvent se toucher mutuellement en direction périphérique et qui peuvent glisser l'une sur l'autre en direction radiale R,
dans lequel les éléments de déverrouillage (55) sont prévus pour pouvoir être poussés radialement vers l'intérieur, de telle manière que les faces de contact (56) des éléments de déverrouillage (55) poussent les éléments de verrouillage (51) radialement vers l'extérieur par l'intermédiaire de leurs faces de contact (54) .

2. Dispositif de raccordement rapide (3) selon la revendication 1, dans lequel le corps de verrouillage (5) présente deux éléments de verrouillage opposés essentiellement radialement l'un à l'autre et deux éléments de déverrouillage (55) opposés essentiellement radialement l'un à l'autre.

3. Dispositif de raccordement rapide (3) selon la revendication 2, dans lequel les deux éléments de déverrouillage (55) sont disposés avec un décalage d'essentiellement environ 90° en direction périphérique par rapport aux deux éléments de verrouillage (51).

4. Dispositif de raccordement rapide (3) selon l'une quelconque des revendications précédentes, dans lequel aussi bien les éléments de verrouillage (51) que les éléments de déverrouillage (55) sont prévus avec une élasticité radiale.

5. Dispositif de raccordement rapide (3) selon la revendication 4, dans lequel les éléments de verrouillage (51) sont dotés d'un retour élastique radialement vers l'intérieur et les éléments de déverrouillage (55) sont dotés d'un retour élastique radialement vers l'extérieur.

6. Dispositif de raccordement rapide (3) selon l'une quelconque des revendications précédentes, dans lequel le boîtier (4) présente au moins deux ouvertures découpées (42) opposées essentiellement radialement l'une à l'autre, à travers lesquelles les éléments de déverrouillage (55) peuvent être actionnés.

7. Dispositif de raccordement rapide (3) selon l'une quelconque de revendications précédentes, avec en outre un couvercle (6) pour la fixation du corps de verrouillage (5) à l'intérieur du boîtier (4), dans lequel le couvercle (6) est maintenu en direction longitudinale A au moyen d'au moins une ouverture de verrouillage (62) par au moins une saillie (40) du boîtier (4).

8. Corps de verrouillage (5) destiné à être utilisé dans un dispositif de raccordement rapide (3) selon l'une quelconque des revendications 1 à 7,
dans lequel le corps de verrouillage (5) présente au moins deux éléments de verrouillage (51) agissant essentiellement radialement, qui sont prévus pour verrouiller en direction longitudinale A une buse (SAE) (1) dans une ouverture de buse (41) d'un boîtier (4),
dans lequel le corps de verrouillage (5) présente en outre au moins deux éléments de déverrouillage (55) agissant essentiellement radialement, qui sont prévus pour pouvoir, par leur actionnement, lever le verrouillage de la buse (SAE) (1) par les éléments de verrouillage (51),
dans lequel les éléments de verrouillage (51) et les éléments de déverrouillage (55) présentent respectivement des faces de contact (54, 56) orientées en direction périphérique, qui peuvent se toucher mutuellement en direction périphérique et qui peuvent glisser l'une sur l'autre en direction radiale R,
dans lequel les éléments de déverrouillage (55) sont prévus pour pouvoir être poussés radialement vers l'intérieur, de telle manière que les faces de contact (56) des éléments de déverrouillage (55) poussent les éléments de verrouillage (51) radialement vers l'extérieur par l'intermédiaire de leurs faces de contact (54) .
